# EUROPEAN PATENT APPLICATION

(11) **EP 4 280 738 A1**
(43) Date of publication of application: **22.11.2023**
(21) Application number: 21918317.5
(22) Date of filing: 13.01.2021
(51) Int. Cl.: H04W 72/04

(54) **METHOD AND APPARATUS FOR DETERMINING SCHEDULING REQUEST RESOURCE, AND COMMUNICATION DEVICE**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2021/071602
(87) International publication number: WO 2022/151102

(57) **Abstract**

The present disclosure relates to the technical field of mobile communications. Provided are a method and apparatus for determining a scheduling request (SR) resource, and a communication device. The solution is: determining a physical uplink control channel (PUCCH) resource, wherein the PUCCH resource is used for sending an SR corresponding to a beam failure recovery (BFR) of one or more transmission reception points (TRPs). Thus, when a beam failure occurs in the TRP, a UE can send, in a timely manner, the SR for indicating the BFR, so as to perform beam recovery as soon as possible, improving the timeliness of the beam recovery and the beam recovery efficiency, and increasing the throughput.

## Description

### TECHNICAL FIELD

The present disclosure relates to a field of mobile communication technology, and particularly relates to a method and apparatus for determining a scheduling request resource, and a communication device.

### BACKGROUND

In order to meet the requirements of extremely high-speed short-distance communications, transmission rate and the like, a mobile communication system may use a high-frequency band (such as a frequency band greater than or equal to 6 GHz) to transmit a signal, so as to alleviate shortage of spectrum resources.

Since an attenuation of a high-frequency channel is fast, in order to ensure the coverage range, beam-based transmission and reception may be used. For example, a user equipment (UE) and a network device may achieve data transmission by beam alignment.

In a new radio (NR) technology, a control channel may also use the beam-based transmission and reception. When the UE moves or an antenna rotates, a problem may occur to a sending beam or a receiving beam currently configured for the UE to transmit or receive a physical downlink control channel (PDCCH). That is, the beam failure problem occurs. Therefore, how to improve timeliness and efficiency of beam recovery is an urgent problem to be solved.

### SUMMARY

A first aspect of embodiments of the present disclosure provide a method for determining a scheduling request resource, the method is applicable to a UE, and includes:
determining a physical uplink control channel (PUCCH) resource, in which the PUCCH resource is configured to send a scheduling request (SR) corresponding to a beam failure recovery (BFR) of one or more transmission and reception points (TRPs).

A second aspect of the embodiments of the present disclosure provides a method for determining a scheduling request resource, the method is applicable to a network device, and includes:
sending configuration information to a UE, in which the configuration information is configured to indicate a PUCCH resource of the UE, the PUCCH resource is configured for the UE to send an SR corresponding to a BFR of one or more TRPs.

A third aspect of the embodiments of the present disclosure provides an apparatus for determining a scheduling request resource, the apparatus is applicable to a UE, and includes: a determining module, configured to determine a PUCCH resource; in which the PUCCH resource is configured to send an SR corresponding to a BFR of one or more TRPs.

A fourth aspect of the embodiments of the present disclosure provides an apparatus for determining a scheduling request resource, the apparatus is applicable to a network device, and includes:
a sending module, configured to send configuration information to a UE, in which the configuration information is configured to indicate a PUCCH resource of the UE, the PUCCH resource is configured for the UE to send an SR corresponding to a BFR of one or more TRPs.

A fifth aspect of the embodiments of the present disclosure provides a communication device. The communication device includes: a processor, a transceiver, a memory, and a computer program stored on the memory, in which the processor executes the computer program to implement the method for determining a scheduling request resource according to the first aspect of the embodiments.

A sixth aspect of the embodiments of the present disclosure provides a communication device. The communication device includes: a processor, a transceiver, a memory, and a computer program stored on the memory, in which the processor executes the computer program to implement the method for determining a scheduling request resource according to the second aspect of the embodiments.

A seventh aspect of the embodiments of the present disclosure provides a computer storage medium. The computer storage medium stores an executable program; after the executable program is executed by a processor, the method for determining a scheduling request resource according to the first aspect of the embodiments is implemented.

An eighth aspect of the embodiments of the present disclosure provides a computer storage medium. The computer storage medium stores an executable program; after the executable program is executed by a processor, the method for determining a scheduling request resource according to the second aspect of the embodiments is implemented.

A ninth aspect of the embodiments of the present disclosure provides a computer program product. The computer program product includes a computer program, when the computer program is executed by a processor in a communication device, the method for determining a scheduling request resource according to the first aspect of the embodiments is implemented.

A tenth aspect of the embodiments of the present disclosure provides a computer program. When the computer program is executed by a processor, the method for determining a scheduling request resource according to the second aspect of the embodiments is implemented.

With the method and apparatus for determining a scheduling request resource, and the communication device provided in the embodiments of the present disclosure, the PUCCH resource is determined, the PUCCH resource is configured to send an SR corresponding to a BFR of one or more TRPs, so that when a beam failure occurs to a TRP, the UE can send the SR for indicating the BFR in time, and beam recovery can be performed as soon as possible, which improves timeliness and efficiency of the beam recovery, thereby improving throughput.

Additional aspects and advantages of the present disclosure will be set forth in part in the following description, and in part will become obvious from the following description, or may be learned by practice of the disclosure.

### BRIEF DESCRIPTION OF THE DRAWINGS

The above and/or additional aspects and advantages of the present disclosure will become apparent and more readily appreciated from the following descriptions made with reference to the accompanying drawings, in which:
FIG. 2 is a flowchart of a method for determining a scheduling request resource provided in another embodiment of the present disclosure.
FIG. 3 is a flowchart of a method for determining a scheduling request resource provided in another embodiment of the present disclosure.
FIG. 4 is a flowchart of a method for determining a scheduling request resource provided in another embodiment of the present disclosure.
FIG. 5 is a flowchart of a method for determining a scheduling request resource provided in another embodiment of the present disclosure.
FIG. 6 is a flowchart of a method for determining a scheduling request resource provided in another embodiment of the present disclosure.
FIG. 7 is a flowchart of a method for determining a scheduling request resource provided in another embodiment of the present disclosure.
FIG. 8 is a flowchart of a method for determining a scheduling request resource provided in another embodiment of the present disclosure.
FIG. 9 is a flowchart of a method for determining a scheduling request resource provided in another embodiment of the present disclosure.
FIG. 10 is a flowchart of a method for determining a scheduling request resource provided in another embodiment of the present disclosure.
FIG. 11 is a flowchart of a method for determining a scheduling request resource provided in another embodiment of the present disclosure.
FIG. 12 is a flowchart of a method for determining a scheduling request resource provided in another embodiment of the present disclosure.
FIG. 13 is a flowchart of a method for determining a scheduling request resource provided in another embodiment of the present disclosure.
FIG. 14 is a block diagram of an apparatus for determining a scheduling request resource provided in an embodiment of the present disclosure.
FIG. 15 is a block structure of an apparatus for determining a scheduling request resource provided in another embodiment of the present disclosure.
FIG. 16 is a block structure of a communication device provided in an embodiment of the present disclosure.

### DETAILED DESCRIPTION

Embodiments of the present disclosure are described in detail below, and examples of embodiments are illustrated in the accompanying drawings, in which the same or similar labels represent the same or similar elements or elements with the same or similar functions. The embodiments described below with reference to the drawings are exemplary, are intended to be configured to explain the present disclosure and are not to be construed as a limitation of the present disclosure.

In the related art, the communication standard defines a reference signal resource set for detecting a beam failure. When a channel quality on each reference signal in the reference signal resource set detected by the UE is less than a given threshold, it indicates that the beam failure has occurred. Beam failure detection in the related art is based on a serving cell. When the channel quality on each reference signal in the reference signal resource set corresponding to the serving cell is less than the given threshold, it is considered that the beam failure occurs to the serving cell. It can be seen that, if a beam failure recovery request is sent in this case, timeliness and efficiency of beam recovery may be poor.

For the problem, the embodiments of the present disclosure provide a method and apparatus for determining a scheduling request resource, and a communication device.

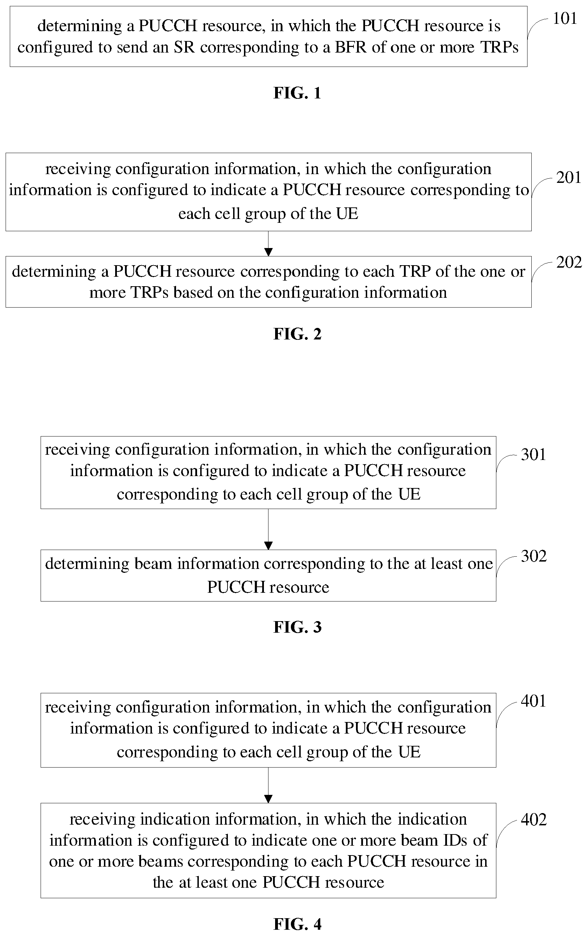

FIG. 1 is a flowchart of a method for determining a scheduling request resource provided in an embodiment of the present disclosure, the method may be performed by the UE. As illustrated in FIG. 1, the method includes the following step.

At step 101, a PUCCH resource is determined, the PUCCH resource is configured to send an SR corresponding to a BFR of one or more TRPs.

In the present disclosure, the network device may have one or more TRPs. The TRP refers to an antenna array supporting more than one transmitting or receiving function, for example, may have multiple antennas with different orientations. The network device may send the configuration information to the UE, and the UE may determine the PUCCH resource based on the configuration information sent by the network device. The PUCCH resource is configured to send the SR corresponding to the BFR of the one or more TRPs. The TRP may correspond to a serving cell of the UE, or may correspond to a neighboring cell of the UE.

The UE may perform beam failure detection. When the UE detects that a beam failure occurs to the TRP, the UE may send the SR corresponding to the BFR of the one or more TRPs to the network device by using the PUCCH resource, so as to perform beam recovery as soon as possible.

In the present disclosure, the network device may be a base station. For example, the base station involved in the present disclosure may be a base transceiver station (BTS) in a global system for mobile communications (GSM) or code division multiple access (CDMA), or a base station (NodeB) in a wide-band code division multiple access (WCDMA), an evolutional Node B (eNB or e-NodeB for short) in a long term evolution (LTE), a 5G base station (gNB for short) in a next generation system, a home evolved Node B (HeNB), a relay node, a Femto, a pico base station (PICO), and the like, which is not limited in the present disclosure.

According to the method for determining a scheduling request resource in the embodiment of the present disclosure, the PUCCH resource is determined, and the PUCCH resource is configured to send the SR corresponding to the BFR of the one or more TRPs, so that when the beam failure occurs to the TRP, the UE may send the SR for indicating the BFR in time, and the beam recovery can be performed as soon as possible, which improves timeliness and efficiency of the beam recovery, thereby improving throughput.

FIG. 2 is a flowchart of a method for determining a scheduling request resource provided in another embodiment of the present disclosure. The method can be executed by the UE. As illustrated in FIG. 2, the method includes the following steps.

At step 201, configuration information is received, the configuration information is configured to indicate a PUCCH resource corresponding to each cell group of the UE.

In the present disclosure, the UE may receive the configuration information sent by the network device. The configuration information is configured to indicate the respective PUCCH resource corresponding to each cell group of the UE. The cell group may be one of a master cell group (MCG), a secondary cell group (SCG), a primary PUCCH group, or a secondary PUCCH group.

Optionally, the configuration information received by the UE includes at least one of a cell group identification (ID) or at least one PUCCH resource ID corresponding to the cell group ID. The UE may determine at least one PUCCH resource ID corresponding to each cell group based on the received configuration information. Each cell group of the UE may correspond to a same number of PUCCH resources or a different number of PUCCH resources.

It may be understood that each cell group ID may correspond to one PUCCH resource ID, that is, the network device may configure one PUCCH resource for each cell group. Each cell group ID may also correspond to multiple PUCCH resource IDs, that is, the network device may configure multiple PUCCH resources for each cell group of the UE.

At step 202, a PUCCH resource corresponding to each TRP of one or more TRPs is determined based on the configuration information.

In the present disclosure, the configuration information is configured to indicate the PUCCH resource corresponding to each cell group of the UE. The UE may determine the PUCCH resource corresponding the one TRP or each TRP of the multiple TRPs based on the configuration information.

Optionally, the UE may determine a serving cell where each TRP of the one or more TRPs is located, then determine the cell group to which the serving cell belongs. The UE determines the PUCCH resource corresponding to each TRP of the one or more TRPs based on the cell group including the serving cell where each TRP of the one or more TRPs is located and the PUCCH resource corresponding to each cell group in the configuration information. For example, the PUCCH resource corresponding to the cell group to which the serving cell of the TRP belongs may be used as the PUCCH resource corresponding to the TRP.

In the present disclosure, the PUCCH resource used by the UE to send the SR corresponding to the BFR of the one or more TRPs may be the same as a second PUCCH resource of the UE, or may be different from the second PUCCH resource. The second PUCCH resource is configured to send the SR corresponding to the BFR of the serving cell. That is, the PUCCH resource used by the UE to send the SR corresponding to the BFR of the one or more TRPs, may be multiplexed with the second PUCCH resource used by the UE to send the SR corresponding to the BFR of the serving cell, or may be different from the PUCCH resource used by the UE to send the SR corresponding to the BFR of the serving cell.

According to the method for determining a scheduling request resource in the embodiment of the present disclosure, the configuration information is received, the configuration information is configured to indicate the PUCCH resource corresponding to each cell group of the UE. The PUCCH resource corresponding to the serving cell where each TRP of the one or more TRPs is located is determined based on the configuration information. Accordingly, the corresponding PUCCH resource can be configured for each TRP of the one or more TRPs based on the configuration information. When the beam failure occurs to the TRP, the UE may send the SR for indicating the BFR in time, and the beam recovery can be performed as soon as possible, which improves throughput.

FIG. 3 is a flowchart of a method for determining a scheduling request resource provided in another embodiment of the present disclosure. The method can be executed by the UE. As illustrated in FIG. 3, the method includes the following steps.

At step 301, configuration information is received, the configuration information is configured to indicate a PUCCH resource corresponding to each cell group of the UE.

In the present disclosure, step 301 may be implemented in any one manner in each embodiment of the present disclosure, which is not limited here and not repeated here.

At step 302, beam information corresponding to at least one PUCCH resource is determined.

In the present disclosure, each cell group of the UE may correspond to at least one PUCCH resource. The UE may further determine the beam information corresponding to the at least one PUCCH resource. The beam information may include information such as a beam direction, a beam ID, and the like.

Optionally, the UE may receive indication information sent by the network device. The indication information may include the beam information corresponding to the at least one PUCCH resource. The UE may determine the beam information corresponding to the at least one PUCCH resource based on the indication information.

If one cell group corresponds to one PUCCH resource, the UE may determine the beam information corresponding to the PUCCH resource. If one cell group corresponds to multiple PUCCH resources, the UE may determine the beam information corresponding to each PUCCH resource.

When the UE detects that the beam failure occurs, the SR request corresponding to the BFR of the TRP may be sent to the network device by using the PUCCH resource and a beam corresponding to the PUCCH resource, so as to perform beam recovery as soon as possible.

According to the method for determining a scheduling request resource in the embodiment of the present disclosure, the configuration information is received, the configuration information is configured to indicate the PUCCH resource corresponding to each cell group of the UE. The beam information corresponding to the at least one PUCCH resource is determined. Accordingly, the one or more pieces of beam information corresponding to at least one PUCCH resource corresponding to each cell group may be determined based on the configuration information, so that when the beam failure occurs to the TRP, the UE can send the SR for indicating the BFR in time, and the beam recovery can be performed as soon as possible, which improves timeliness and efficiency of the beam recovery, thereby improving throughput.

FIG. 4 is a flowchart of a method for determining a scheduling request resource provided in another embodiment of the present disclosure. The method can be executed by the UE. As illustrated in FIG. 4, the method includes the following steps.

At step 401, configuration information is received, the configuration information is configured to indicate a PUCCH resource corresponding to each cell group of the UE.

In the present disclosure, step 401 may be implemented in any one manner in the embodiments of the present disclosure, which is not limited here and not repeated here.

At step 402, indication information is received, the indication information is configured to indicate one or more beam IDs of one or more beams corresponding to each PUCCH resource in at least one PUCCH resource.

In the present disclosure, each cell group of the UE may correspond to at least one PUCCH resource. The UE may receive the indication information sent by the network device. The indication information may be configured to indicate the one or more beam IDs of the one or more beams corresponding to each PUCCH resource in the at least one PUCCH resource. The beam ID may be a transmission configuration indication (TCI) state ID or a SpatialRelationInfo ID for indicating a beam. The beam ID may also be a reference signal resource ID configured to indicate a beam. The reference signal resource ID corresponds to the TCI state ID or the SpatialRelationInfo ID.

It may be understood that the indication information may be configured to indicate a beam ID of one beam corresponding to the one PUCCH resource, or may be configured to indicate multiple beam IDs of multiple beams corresponding to one PUCCH resource. Alternatively, the indication information may also indicate one beam ID corresponding to each PUCCH resource in multiple PUCCH resources, or may indicate multiple beam IDs corresponding to each PUCCH resource.

That is, the network device may indicate one beam or multiple beams for each PUCCH resource in the at least one PUCCH resource corresponding to each cell group of the UE.

According to the method for determining a scheduling request resource in the embodiment of the present disclosure, the configuration information is received, and the configuration information is configured to indicate the PUCCH resource corresponding to each cell group of the UE. The indication information is received, and the indication information is configured to indicate the one or more beam IDs of the one or more beams corresponding to each PUCCH resource in the at least one PUCCH resource. Accordingly, the corresponding PUCCH resource and beam information can be configured for each cell group based on the configuration information and the indication information, so that the UE can send the SR for indicating the BFR in time when a beam failure occurs to the TRP, and the beam recovery can be performed as soon as possible, which improves timeliness and efficiency of the beam recovery, thereby improving throughput.

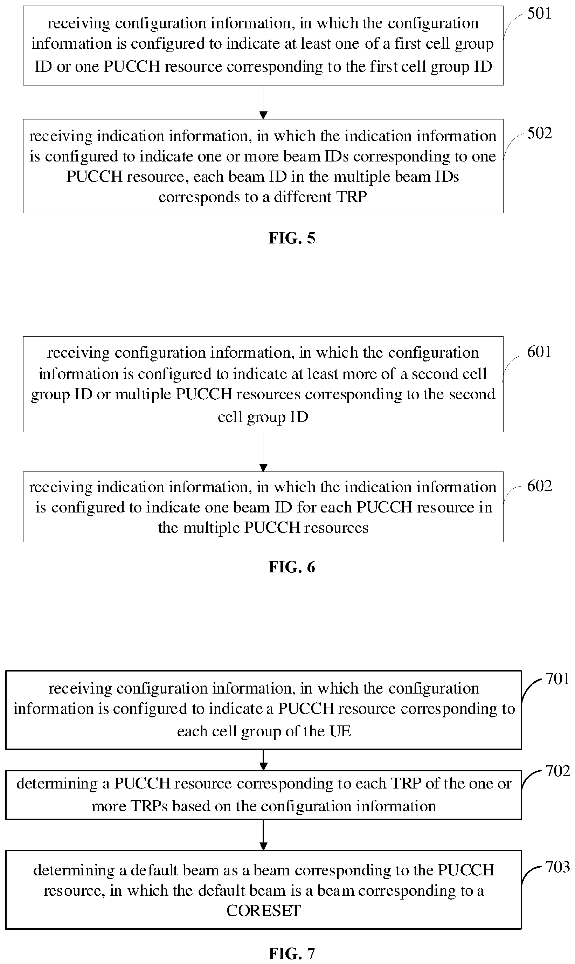

FIG. 5 is a flowchart of a method for determining a scheduling request resource provided in another embodiment of the present disclosure. The method can be executed by the UE. As illustrated in FIG. 5, the method includes the following steps.

At step 501, configuration information is received, the configuration information is configured to indicate at least one of a first cell group ID or one PUCCH resource corresponding to the first cell group ID.

In the present disclosure, the UE receives the configuration information sent by the network device. The configuration information may include a cell group ID and one PUCCH resource ID corresponding to the cell group ID. In order to facilitate distinguishing, the cell group is called the first cell group, i.e., the configuration information may be configured to indicate the first cell group ID and one PUCCH resource corresponding to the first cell group ID. In other words, the network device may configure one PUCCH resource for the first cell group of the UE.

At step 502, indication information is received, the indication information is configured to indicate one or more beam IDs corresponding to one PUCCH resource. Each beam ID in the multiple beam IDs corresponds to a different TRP.

In the present disclosure, the UE may receive the indication information sent by the network device. The indication information may be configured to indicate one or more beam IDs corresponding to one PUCCH resource. Different beam IDs in the multiple beam IDs correspond to different TRPs, that is, corresponding to different TRP IDs or different control resource set (CORESET) pool index IDs.

That is, the network device may configure one PUCCH resource, and one or more beams corresponding to the PUCCH resource for the first cell group of the UE. If one PUCCH resource corresponds to multiple beams, each beam corresponds to a different TRP.

In the present disclosure, the indication information may be at least one of a medium access control control element (MAC CE) or downlink control information (DCI).

The UE may receive a radio resource control (RRC) signaling sent by the network device. The signaling may include a beam list, such as a list of TCI state IDs corresponding to beams or a list of SpatialRelationInfo IDs corresponding to beams. The network device may activate one of the beams by a MAC CE signaling. The beam corresponding to one TRP, and the UE may receive the MAC CE signaling sent by the network device. The MAC CE signaling may include at least one of one beam ID, a TRP ID corresponding to the beam ID, a CORESET pool index corresponding to the beam ID, a PUCCH resource ID, and the like. One beam corresponding to the beam ID included in the MAC CE signaling is a beam corresponding to one PUCCH resource.

The network device may activate one or more beams by a MAC CE signaling, and then indicate one beam ID corresponding to one PUCCH resource by a DCI signaling. The beam ID corresponding to one TRP. One beam corresponding to one PUCCH resource indicated by the DCI signaling is one of the multiple beams activated by the MAC CE signaling. The UE may receive the DCI signaling sent by the network device. The DCI signaling may include at least one of one beam ID, a TRP ID corresponding to the beam ID, a CORESET pool index corresponding to the beam ID, a PUCCH resource ID, and the like. The beam corresponding to the beam ID included in the DCI signaling is a beam corresponding to the one PUCCH resource.

Optionally, the network device may also directly indicate one beam ID corresponding to one PUCCH resource by the DCI signaling.

It should be noted that when the MAC CE signaling and the DCI signaling indicate one beam ID corresponding to one PUCCH resource, the beam ID indicated by the signaling at the current moment may correspond to a first TRP, and the beam ID indicated by the signaling at the next moment may correspond to a second TRP. That is, although one PUCCH resource corresponds to only one beam, it can correspond to beams of different TRPs at different times. The beam ID corresponding to the beam may be updated by indication signalings at different times to achieve handover between different TRPs.

The network device may also activate multiple beams by the MAC CE signaling. Each beam corresponds to a different TRP. The UE may receive the MAC CE signaling sent by the network device. The MAC CE signaling may include at least one of followings: multiple beam IDs, a TRP ID corresponding to each beam ID, a CORESET pool index corresponding to each beam ID, a PUCCH resource ID, an indication field corresponding to each beam ID, and the like. The indication field corresponding to each beam ID may be configured to indicate whether the respective beam ID presents in the MAC CE signaling.

Optionally, whether the beam ID presents in the MAC CE signaling may be indicated by a value of a bit corresponding to the indication field. For example, if the value of the bit of the indication field corresponding to the beam ID is 0, it indicates that the beam ID does not present in the MAC CE signaling. If the value is 1, it indicates that the beam ID presents in the MAC CE signaling. It should be noted that the value and the indicated content herein are merely examples, and should not be used as a limitation on the present disclosure.

The network device may indicate multiple beam IDs corresponding to one PUCCH resource by the DCI signaling. Each beam corresponds to a different TRP. The UE may receive the DCI signaling sent from the network device. The DCI signaling indicates multiple beam IDs corresponding to the one PUCCH resource. A code point of the DCI signaling may correspond to one or more beam IDs. If one beam ID is indicated, the beam ID corresponds to one TRP. If the multiple beam IDs are indicated, different beam IDs correspond to different TRPs.

In the present disclosure, the number of the beam IDs corresponding to the code point of the DCI signaling and the corresponding beam IDs may be indicated by the MAC CE signaling. That is, one or more beams corresponding to the one or more beam IDs corresponding to the code point in the DCI signaling are one or more beams in the multiple beams activated by the MAC CE signaling.

According to the method for determining a scheduling request resource in the embodiment of the present disclosure, the configuration information is received. The configuration information is configured to indicate at least one of a first cell group ID and one PUCCH resource corresponding to the first cell group ID. The indication information is received. The indication information is configured to indicate one or more beam IDs corresponding to the one PUCCH resource. Each beam ID in the multiple beam IDs corresponds to a different TRP. Accordingly, the PUCCH resource and the corresponding beam can be configured for each TRP of the one or more TRPs based on the configuration information and the indication information, so that when the beam failure occurs to the TRP, the UE may send the SR for indicating the BFR in time, and the beam recovery can be performed as soon as possible, which improves throughput.

FIG. 6 is a flowchart of a method for determining a scheduling request resource provided in another embodiment of the present disclosure. The method can be executed by the UE. As illustrated in FIG. 6, the method includes the following steps.

At step 601, configuration information is received. The configuration information is configured to indicate at least one of a second cell group ID or multiple PUCCH resources corresponding to the second cell group ID.

In the present disclosure, the UE may receive the configuration information sent by the network device. The configuration information may include a cell group ID and multiple PUCCH resource IDs corresponding to the cell group ID. In order to facilitate distinguishing, the cell group is called the second cell group, i.e., the configuration information may be configured to indicate the second first cell group ID and the multiple PUCCH resources corresponding to the second cell group ID. In other words, the network device may configure multiple PUCCH resources for the second cell group of the UE.

At step 602, indication information is received. The indication information is configured to indicate one beam ID for each PUCCH resource in the multiple PUCCH resources.

In the present disclosure, the indication information may include at least one of a MAC CE or DCI.

The UE may receive a RRC signaling sent by the network device, the signaling may include a beam list. The network device may activate one beam corresponding to each PUCCH resource by a MAC CE signaling. The MAC CE signalings used to activate the beams corresponding respectively to the PUCCH resources may be the same or different.

That is, the network device may send multiple MAC CE signalings to the UE. Each MAC CE signaling is configured to activate one beam corresponding to each PUCCH resource. The UE receives the multiple MAC CE signalings sent by the network device. Each MAC CE signaling may be configured to indicate one beam ID corresponding to one PUCCH resource. The MAC CE signaling may include at least one of one beam ID, a TRP ID corresponding to the beam ID, a CORESET pool index corresponding to the beam ID, a PUCCH resource ID, and the like. The UE may determine the beam corresponding to each PUCCH resource and the TRP corresponding to the beam based on each MAC CE signaling.

The network device may send one MAC CE signaling to the UE. The MAC CE signaling is configured to indicate one beam ID for each PUCCH resource in multiple PUCCH resources. The MAC CE signaling may include at least one of followings: multiple beam IDs, a TRP ID corresponding to each beam ID, a CORESET pool index corresponding to each beam ID, a PUCCH resource ID corresponding to each beam ID, an indication field corresponding to each beam ID, and the like. The indication field corresponding to each beam ID may be configured to indicate whether the respective beam ID presents in the MAC CE signaling, which is similar to the above embodiments, and will not be repeated here.

The network device may also indicate, by one or more DCI signalings, one beam ID corresponding to each PUCCH resource in the multiple PUCCH resources. The UE may receive multiple MAC CE signaling sent by the network device. Each MAC CE signaling activates multiple beams for each PUCCH resource. The UE receives multiple DCI signalings of the network device. Each DCI signaling may indicate one beam ID of one beam of the multiple beams activated by the respective MAC CE.

Alternatively, the UE may receive one DCI signaling sent by the network device. The DCI signaling may indicate one beam ID corresponding to each PUCCH resource in the multiple PUCCH resources. A code point of the DCI signaling may correspond to one or more beam IDs. If one beam ID is indicated, the beam ID corresponds to one TRP. If multiple beam IDs are indicated, different beam IDs correspond to different TRPs.

In the present disclosure, the number of the beam IDs corresponds to the code point of the DCI signaling and the corresponding beam IDs may be indicated by the MAC CE signaling. That is, one or more beams corresponding to the one or more beam IDs corresponding to the code point in the DCI signaling are one or more beams in the multiple beams activated by the MAC CE signaling.

According to the method for determining a scheduling request resource in the embodiment of the present disclosure, the configuration information is received. The configuration information is configured to indicate at least one of the second cell group and multiple PUCCH resources corresponding to the second cell group. The indication information is received. The indication information is configured to indicate one beam ID for each PUCCH resource in the multiple PUCCH resources. Accordingly, the PUCCH resource and the corresponding beam can be configured for each TRP of the one or more TRPs based on the configuration information and the indication information, so that when the beam failure occurs to the TRP, the UE may send the SR for indicating the BFR in time, and the beam recovery can be performed as soon as possible, which improves timeliness and efficiency of the beam recovery, thereby improving throughput.

FIG. 7 is a flowchart of a method for determining a scheduling request resource provided in another embodiment of the present disclosure. The method can be executed by the UE. As illustrated in FIG. 7, the method includes the following steps.

At step 701, configuration information is received, the configuration information is configured to indicate a PUCCH resource corresponding to each cell group of the UE.

In the present disclosure, step 701 may be implemented in any one manner in each embodiment of the present disclosure, which is not limited here and not repeated here.

At step 702, a PUCCH resource corresponding to each TRP of the one or more TRPs is determined based on the configuration information.

In the present disclosure, step 702 may be implemented in any one manner in each embodiment of the present disclosure, which is not limited, nor repeated herein.

At step 703, a default beam is determined as a beam corresponding to the PUCCH resource, the default beam is a beam corresponding to a CORESET.

In the disclosure, the default beam may be used as the beam corresponding to the PUCCH resource. The default beam may be the beam corresponding to the CORESET. The default beam may be the beam corresponding to a CORESET pool ID corresponding to the PUCCH or CORESETs with a same TRP ID. That is, the UE may use the default beam as the beam corresponding to the PUCCH resource for sending the SR of the BFR of the TRP

According to the method for determining a scheduling degree request resource in the embodiment of the present disclosure, when the beam information corresponding to the at least one PUCCH resource is determined, the default beam may be determined as the beam corresponding to the PUCCH resource. Therefore, when the beam failure occurs, the SR corresponding to the BFR of the TRP may be sent by using the beam corresponding to the CORESET, which improves timeliness and efficiency of the beam recovery, thereby improving throughput.

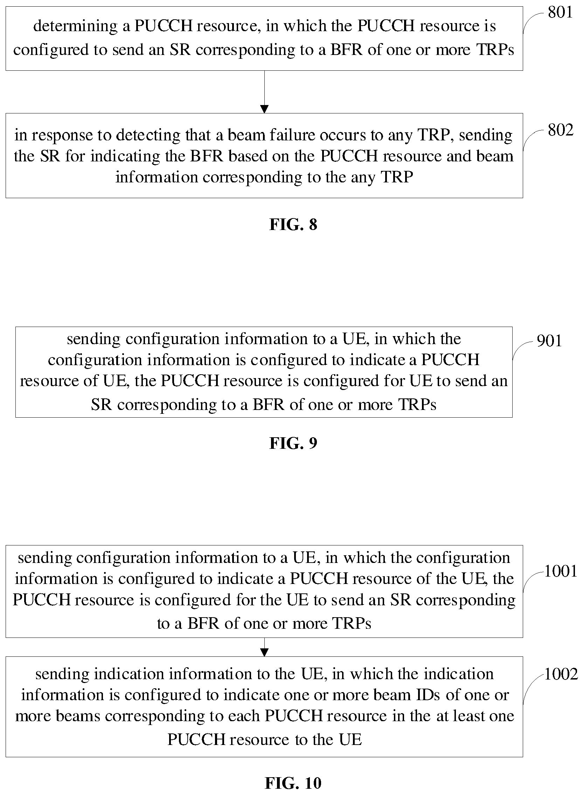

FIG. 8 is a flowchart of a method for determining a scheduling request resource provided in another embodiment of the present disclosure. The method can be executed by the UE. As illustrated in FIG. 8, the method includes the following steps.

At step 801, a PUCCH resource is determined, the PUCCH resource is configured to send an SR corresponding to a BFR of one or more TRPs.

In the present disclosure, step 801 may be implemented in any one manner in each embodiment of the present disclosure, which is not limited, nor repeated herein.

At step 802, in response to detecting that a beam failure occurs to any TRP, the SR for indicating the BFR is sent based on the PUCCH resource and beam information corresponding to the any TRP.

In the present disclosure, the network device may have at least one TRP, and each TRP has a corresponding PUCCH resource and beam information. The UE may perform beam failure detection on the TRPs. In response to detecting that the beam failure occurs to any TRP, the SR for indicating the BFR may be sent on the beam corresponding to the any TRP by using the PUCCH resource corresponding to the any TRP. When the beam failure occurs to each beam corresponding to the PUCCH resource corresponding to the TRP where the beam failure is detected, the PUCCH resource corresponding to a TRP not belonging to the same cell group as the TRP may also be used to send the SR for indicating the BFR.

After receiving the SR for indicating the BFR, the network device may schedule a physical uplink shared channel (PUSCH) resource for the UE based on the SR. The UE may send one or more indexes of one or more TRPs where the beam failure occurs and/or one or more serving cell IDs corresponding to the one or more TRPs to the network device by using a MAC CE signaling and the PUSCH resource. If new beam information is detected, the new beam information may be sent, so that the network device performs beam recovery as soon as possible based on the information sent by the UE.

According to the method for determining a scheduling request resource in the embodiment of the present disclosure, the PUCCH resource is determined. The PUCCH resource is configured to send the SR corresponding to the BFR of the one or more TRPs. In response to detecting that the beam failure occurs to any TRP, the SR for indicating the BFR is sent based on the PUCCH resource and the beam information corresponding to the any TRP. Accordingly, the PUCCH resource for sending the SR corresponding to the BFR of each TRP of the one or more TRPs is configured for the UE, so that when the beam failure occurs to the TRP, the UE can send the SR for indicating the BFR in time, and the beam recovery can be performed as soon as possible, which improves timeliness and efficiency of the beam recovery, thereby improving throughput.

FIG. 9 is a flowchart of a method for determining a scheduling request resource provided in another embodiment of the present disclosure. The method may be executed by the network device. As illustrated in FIG. 9, the method for determining a scheduling request resource includes the following steps.

At step 901, configuration information is sent to a UE. The configuration information is configured to indicate a PUCCH resource of the UE. The PUCCH resource is configured for UE to send an SR corresponding to a BFR of one or more TRPs.

In the present disclosure, the network device may have one or more TRPs, and the TRP refers to an antenna array supporting more than one transmitting or receiving function. For example, the TRP may have multiple antennas with different orientations. The network device sends the configuration information to the UE. The configuration information is configured to indicate the PUCCH resource of the UE. The PUCCH resource is configured for the UE to send the SR corresponding to the BFR of one or more TRPs. The UE may determine the PUCCH resource configured to send the SR corresponding to the BFR of the one or more TRPs based on the configuration information sent by the network device. The TRP may correspond to a serving cell of the UE, or may correspond to a neighboring cell of the UE.

The UE may perform beam failure detection, and when the UE detects that a beam failure occurs to the TRP, the UE may send the SR corresponding to the BFR of the TRP to the network device by using the PUCCH resource, so as to perform beam recovery as soon as possible.

According to the method for determining a scheduling request resource in the embodiment of the present disclosure, the configuration information is sent to the UE. The configuration information is configured to indicate the PUCCH resource of the UE. The PUCCH resource is configured for the UE to send the SR corresponding to the BFR of the one or more TRPs, so that the UE determines the PUCCH resource for sending the SR corresponding to the BFR of the one or more TRPs. Accordingly, when the beam failure occurs to the TRP, the UE may send the SR for indicating the BFR in time, and the beam recovery can be performed as soon as possible, which improves timeliness and efficiency of the beam recovery, thereby improving throughput.

FIG. 10 is a flowchart of a method for determining a scheduling request resource provided in another embodiment of the present disclosure. The method can be executed by the network device. As illustrated in FIG. 10, the method for determining a scheduling request resource includes the following steps.

At step 1001, configuration information is sent to a UE. The configuration information is configured to indicate a PUCCH resource of the UE. The PUCCH resource is configured for the UE to send an SR corresponding to a BFR of one or more TRPs.

In the present disclosure, the configuration information may include at least one of a cell group ID or at least one PUCCH resource ID corresponding to the cell group ID. The UE may determine at least one PUCCH resource ID corresponding to each cell group based on the received configuration information. Each cell group of the UE may correspond to a same number of PUCCH resources or a different number of PUCCH resources.

It may be understood that each cell group ID may correspond to one PUCCH resource ID, that is, the network device may configure one PUCCH resource for each cell group. Each cell group ID may also correspond to multiple PUCCH resource IDs, that is, the network device may configure multiple PUCCH resources for each cell group of the UE.

At step 1002, indication information is sent to the UE, the indication information is configured to indicate one or more beam IDs of one or more beams corresponding to each PUCCH resource in the at least one PUCCH resource to the UE.

In the present disclosure, the network device may send the indication information to the UE. The indication information may include one or more beam IDs for indicating one or more beams corresponding to the at least one PUCCH resource to the UE. The beam ID may be a TCI state ID or a SpatialRelationInfo ID for indicating a beam. The beam ID may also be a reference signal resource ID configured to indicate a beam. The reference signal resource ID corresponds to the TCI state ID or the SpatialRelationInfo ID.

It may be understood that the indication information may be configured to indicate a beam ID of one beam corresponding to one PUCCH resource, or may be configured to indicate beam IDs of multiple beams corresponding to one PUCCH resource. Alternatively, the indication information may also indicate one beam ID corresponding to each PUCCH resource in multiple PUCCH resources, or may indicate multiple beam IDs corresponding to each PUCCH resource.

That is, the network device may indicate one beam or multiple beams for each PUCCH resource in the at least one PUCCH resource corresponding to each cell group of the UE.

According to the method for determining a scheduling request resource in the embodiment of the present disclosure, the configuration information is sent to the UE. The configuration information is configured to indicate the PUCCH resource of the UE. The PUCCH resource is configured for the UE to send the SR corresponding to the BFR of the one or more TRPs. The indication information is sent to the UE. The indication information is configured to indicate the one or more beam IDs of the one or more beams corresponding to each PUCCH resource in the at least one PUCCH resource to the UE. Accordingly, one or more beam IDs of one or more beams corresponding each PUCCH resource in the at least one PUCCH resource may be configured for each cell group of the UE based on the configuration information and the indication information, so that when the beam failure occurs, the UE may send the SR corresponding to the BFR of the TRP to the network device by using the PUCCH resource and the corresponding beam in time, and the beam recovery can be performed as soon as possible, which improves timeliness and efficiency of the beam recovery, thereby improving throughput.

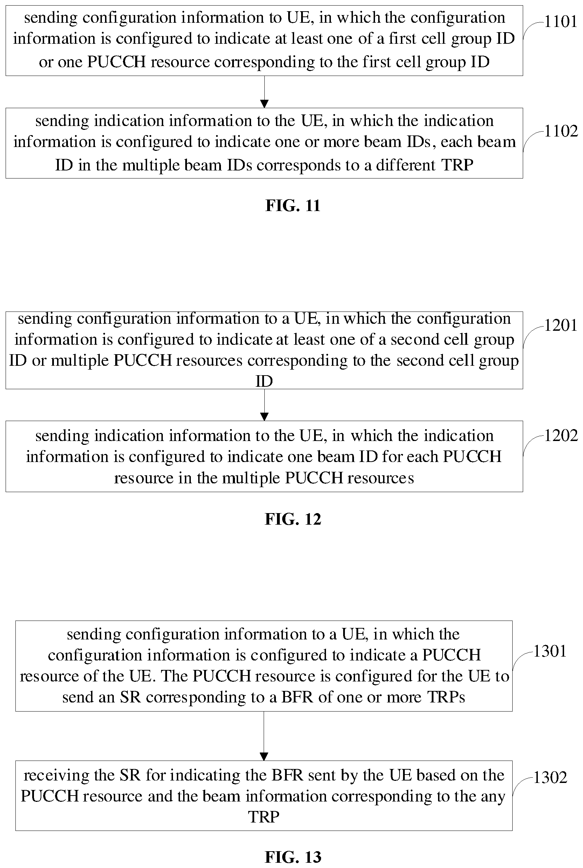

FIG. 11 is a flowchart of a method for determining a scheduling request resource provided in another embodiment of the present disclosure. The method can be executed by the network device. As illustrated in FIG. 11, the method for determining a scheduling request resource includes the following steps.

At step 1101, configuration information is sent to a UE, the configuration information is configured to indicate at least one of a first cell group ID or one PUCCH resource corresponding to the first cell group ID.

In the present disclosure, the network device may send the configuration information to the UE. The configuration information may include a cell group ID and one PUCCH resource ID corresponding to the cell group ID. In order to facilitate distinguishing, the cell group is called the first cell group, i.e., the configuration information may be configured to indicate the first cell group ID and the one PUCCH resource corresponding to the first cell group ID. In other words, the network device may configure one PUCCH resource for the first cell group of the UE.

In the present disclosure, the PUCCH resource for the UE to send the SR corresponding to the BFR of each TRP of the one or more TRPs may be the same as a second PUCCH resource of the UE, or may be different from the second PUCCH resource. The second PUCCH resource may be configured to send the SR corresponding to the BFR of a serving cell. That is, the PUCCH resource for the UE to send the SR corresponding to the BFR of each TRP of the one or more TRPs may be multiplexed with the second PUCCH resource for the UE to send the SR corresponding to the BFR of the serving cell, or may be different from the PUCCH resource configured to send the SR corresponding to the BFR of the serving cell.

At step 1102, indication information is sent to the UE, the indication information is configured to indicate one or more beam IDs. Each beam ID in the multiple beam IDs corresponds to a different TRP.

In the present disclosure, the network device may send the indication information to the UE. The indication information may be configured to indicate one or more beam IDs corresponding to the one PUCCH resource. Different beam IDs in the multiple beam IDs correspond to different TRPs, that is, corresponding to different TRP IDs or different CORESET pool index IDs.

That is, the network device may configure one PUCCH resource, and one or more beams corresponding to the PUCCH resource for the first cell group of the UE. If one PUCCH resource corresponds to multiple beams, each beam corresponds to a different TRP.

In the present disclosure, the indication information may be at least one of a MAC CE or DCI.

The network device may send a RRC signaling to the UE. The signaling may include a beam list, such as a list of TCI state IDs corresponding to beams or a list of SpatialRelationInfo IDs corresponding to beams. The network device may activate one of the beams by the MAC CE signaling. The beam corresponds to one TRP, and the UE may receive the MAC CE signaling sent by the network device. The MAC CE signaling may include at least one of one beam ID, a TRP ID corresponding to the beam ID, a CORESET pool index corresponding to the beam ID, a PUCCH resource ID, and the like. One beam corresponding to the beam ID included in the MAC CE signaling is a beam corresponding to the one PUCCH resource.

The network device may activate one or more beams by the MAC CE signaling, and then indicate one beam ID corresponding to one PUCCH resource by the DCI signaling. The beam ID corresponds to one TRP. One beam corresponding to one PUCCH resource indicated by the DCI signaling is one of the multiple beams activated by the MAC CE signaling. The UE may receive the DCI signaling sent by the network device. The DCI signaling may include at least one of the one beam ID, a TRP ID corresponding to the beam ID, a CORESET pool index corresponding to the beam ID, a PUCCH resource ID, and the like. The beam corresponding to the beam ID included in the DCI signaling is a beam corresponding to the one PUCCH resource.

Optionally, the network device may also directly indicate one beam ID corresponding to one PUCCH resource by the DCI signaling.

It should be noted that when the MAC CE signaling and the DCI signaling indicate one beam ID corresponding to one PUCCH resource, the beam ID indicated by the signaling at the current moment may correspond to a first TRP, and the beam ID indicated by the signaling at the next moment may correspond to a second TRP. That is, although one PUCCH resource corresponds to only one beam, it can correspond to beams of different TRPs at different times. The beam ID corresponding to the beam may be updated by indication signalings at different times to achieve handover between different TRPs.

The network device may also activate multiple beams by the MAC CE signaling. Each beam corresponds to a different TRP. The UE may receive the MAC CE signaling sent by the network device. The MAC CE signaling may include at least one of followings: multiple beam IDs, a TRP ID corresponding to each beam ID, a CORESET pool index corresponding to each beam ID, a PUCCH resource ID, an indication field corresponding to each beam ID, and the like. The indication field corresponding to each beam ID may be configured to indicate whether the respective beam ID presents in the MAC CE signaling.

Optionally, whether the beam ID presents in the MAC CE signaling may be indicated by a value of a bit corresponding to the indication field. For example, if the value of the bit of the indication field corresponding to the beam ID is 0, it indicates that the beam ID does not present in the MAC CE signaling. If the value is 1, it indicates that the beam ID presents in the MAC CE signaling. It should be noted that the value and the indicated content herein are merely examples, and should not be used as a limitation on the present disclosure.

The network device may indicate multiple beam IDs corresponding to one PUCCH resource by the DCI signaling. Each beam corresponds to a different TRP. The UE may receive the DCI signaling sent from the network device. The DCI signaling indicates multiple beam IDs corresponding to the one PUCCH resource. A code point of the DCI signaling may correspond to one or more beam IDs. If one beam ID is indicated, the beam ID corresponds to one TRP. If the multiple beam IDs are indicated, different beam IDs correspond to different TRPs.

In the present disclosure, the number of the beam IDs corresponding to the code point of the DCI signaling and the corresponding beam IDs may be indicated by the MAC CE signaling. That is, one or more beams corresponding to the one or more beam IDs corresponding to the code point in the DCI signaling are one or more beams in the multiple beams activated by the MAC CE signaling.

According to the method for determining a scheduling request resource in the embodiment of the present disclosure, the configuration information is sent. The configuration information is configured to indicate at least one of the first cell group ID and one PUCCH resource corresponding to the first cell group ID. The indication information is sent. The indication information is configured to indicate one or more beam IDs corresponding to the one PUCCH resource. Each beam ID in the multiple beam IDs corresponds to a different TRP. Accordingly, the PUCCH resource and the corresponding beam can be configured for each TRP of the one or more TRPs by using the configuration information and the indication information, so that when the beam failure occurs to the TRP, the UE may send the SR for indicating the BFR in time, and the beam recovery can be performed as soon as possible, which improves timeliness and efficiency of the beam recovery, thereby improving throughput.

FIG. 12 is a flowchart of a method for determining a scheduling request resource provided in another embodiment of the present disclosure. The method can be executed by the network device. As illustrated in FIG. 12, the method for determining a scheduling request resource includes the following steps.

At step 1201, configuration information is sent to a UE, the configuration information is configured to indicate at least one of a second cell group ID or multiple PUCCH resources corresponding to the second cell group ID.

In the present disclosure, the network device may send the configuration information to the UE. The configuration information may include a cell group ID and multiple PUCCH resource IDs corresponding to the cell group ID. In order to facilitate distinguishing, the cell group is called the second cell group, i.e., the configuration information may be configured to indicate the second cell group ID and the multiple PUCCH resources corresponding to the second cell group ID. In other words, the network device may configure multiple PUCCH resources for the second cell group of the UE.

At step 1202, indication information is sent to the UE, the indication information is configured to indicate one beam ID for each PUCCH resource in the multiple PUCCH resources.

In the present disclosure, the indication information may be at least one of a MAC CE or DCI.

The UE may receive a RRC signaling sent by the network device, the signaling includes a beam list. The network device may activate one beam corresponding to each PUCCH resource by a MAC CE signaling. The MAC CE signalings used to activate the beams corresponding respectively to the PUCCH resources may be the same or different.

That is, the network device may send multiple MAC CE signalings to the UE. Each MAC CE signaling is configured to activate one beam corresponding to each PUCCH resource. The UE receives the multiple MAC CE signalings sent by the network device. Each MAC CE signaling may be configured to indicate one beam ID corresponding to one PUCCH resource. The MAC CE signaling may include at least one of one beam ID, a TRP ID corresponding to the beam ID, a CORESET pool index corresponding to the beam ID, a PUCCH resource ID, and the like. The UE may determine the beam corresponding to each PUCCH resource and the TRP corresponding to the beam based on each MAC CE signaling.

The network device may send one MAC CE signaling to the UE. The MAC CE signaling is configured to indicate one beam ID for each PUCCH resource in multiple PUCCH resources. The MAC CE signaling may include at least one of followings: multiple beam IDs, a TRP ID corresponding to each beam ID, a CORESET pool index corresponding to each beam ID, a PUCCH resource ID corresponding to each beam ID, an indication field corresponding to each beam ID, and the like. The indication field corresponding to each beam ID may be configured to indicate whether the respective beam ID presents in the MAC CE signaling, which is similar to the above embodiments, and will not be repeated here.

The network device may also indicate, by one or more DCI signalings, one beam ID corresponding to each PUCCH resource in the multiple PUCCH resources. The UE may receive multiple MAC CE signalings sent by the network device. Each MAC CE signaling activates multiple beams for each PUCCH resource. The UE receives multiple DCI signalings of the network device. Each DCI signaling may indicate one beam ID of one beam of the multiple beams activated by the respective MAC CE.

Alternatively, the network device may send one DCI signaling to the UE. The DCI signaling may indicate one beam ID corresponding to each PUCCH resource in the multiple PUCCH resources. A code point of the DCI signaling may correspond to one or more beam IDs. If one beam ID is indicated, the beam ID corresponds to one TRP. If multiple beam IDs are indicated, each beam ID corresponds to a different TRP.

In the present disclosure, the number of the beam IDs corresponds to the code point of the DCI signaling and the corresponding beam IDs may be indicated by the MAC CE signaling. That is, one or more beams corresponding to the one or more beam IDs corresponding to the code point in the DCI signaling are one or more beams in the multiple beams activated by the MAC CE signaling.

According to the method for determining a scheduling request resource in the embodiment of the present disclosure, the configuration information is sent. The configuration information is configured to indicate at least one of the second cell group and multiple PUCCH resources corresponding to the second cell group. The indication information is sent. The indication information is configured to indicate one beam ID for each PUCCH resource in the multiple PUCCH resources. Accordingly, the PUCCH resource and the corresponding beam can be configured for each TRP of the one or more TRPs by sending the configuration information and the indication information, so that when the beam failure occurs to the TRP, the UE may send the SR for indicating the BFR in time, and the beam recovery can be performed as soon as possible, which improves timeliness and efficiency of the beam recovery, thereby improving throughput.

FIG. 13 is a flowchart of a method for determining a scheduling request resource provided in another embodiment of the present disclosure. The method can be executed by the network device. As illustrated in FIG. 13, the method for determining a scheduling request resource includes the following steps.

At step 1301, configuration information is sent to a UE. The configuration information is configured to indicate a PUCCH resource of the UE. The PUCCH resource is configured for the UE to send an SR corresponding to a BFR of one or more TRPs.

In the present disclosure, step 1301 may be implemented in any one manner in each embodiment of the present disclosure, which is not limited, nor repeated herein.

At step 1302, the SR for indicating the BFR sent by the UE is received based on the PUCCH resource and beam information corresponding to any TRP.

In the present disclosure, the network device may have at least one TRP, and each TRP has a corresponding PUCCH resource and beam information. The UE may perform beam failure detection on the TRPs. In response to detecting that the beam failure occurs to any TRP, the SR for indicating the BFR may be sent on the beam corresponding to the any TRP by using the PUCCH resource corresponding to the any TRP. When the beam failure occurs to each beam corresponding to the PUCCH resource corresponding to the TRP where the beam failure is detected, the PUCCH resource corresponding to a TRP not belonging to the same cell group as the TRP may also be used to send the SR for indicating the BFR.

The network device receives the SR for indicating the BFR sent by the UE based on the PUCCH resource and the beam information corresponding to the any TRP. After receiving the SR, the PUSCH resource may be scheduled for the UE based on the SR. The UE may send one or more indexes of one or more TRPs where the beam failure occurs and/or the serving cell IDs corresponding to the one or more TRPs to the network device by using a MAC CE signaling and the PUSCH resource. If new beam information is detected, the new beam information may be sent. Accordingly, the network device performs beam recovery as soon as possible based on the information sent by the UE.

According to the method for determining a scheduling request resource in the embodiment of the present disclosure, the configuration information is sent to the UE. The configuration information is configured to indicate the PUCCH resource of the UE. The PUCCH resource is configured for the UE to send the SR corresponding to the BFR of the one or more TRPs. The SR for indicating the BFR sent by the UE is received based on the PUCCH resource and the beam information corresponding to the any TRP. Accordingly, by configuring the PUCCH resource for sending the SR corresponding to the BFR of one or more TRPs to the UE, when the beam failure occurs to the TRP, the UE may send the SR for indicating the BFR in time, and the network device may receive the SR for indicating the BFR in time, so as to perform the beam recovery as soon as possible, which improves timeliness and efficiency of the beam recovery, thereby improving throughput.

In order to illustrate the foregoing embodiments, take the network device configuring one PUCCH resource or two PUCCH resources for each cell group of the UE as an example for description.

As a possible implementation, the network device may configure one PUCCH resource for each cell group of the UE, and the beam direction is associated with one TRP.

The network device may activate one of beam directions by using the MAC CE. The beam direction may be switched between different TRPs, or always points to one TRP.

In the embodiment, the MAC CE signaling may include at least one of: a beam ID, a TRP ID (configured to indicate a TRP ID corresponding to each beam), a CORESET pool index (configured to indicate a CORESET pool index corresponding to each beam), or a PUCCH resource ID.

The network device may also indicate one beam corresponding to one PUCCH resource by using a DCI signaling, and may use the DCI signaling for indicating a common beam (both for downlink and uplink) or an uplink common beam (only for uplink), to indicate an uplink common beam of one TRP.

In the implementation, multiple beams may be activated by the MAC CE signaling. All beams that may be activated correspond to one TRP, or correspond to different TRPs. The DCI signaling indicates one of the activated multiple beams.

The uplink common beam may not only be used for a PUCCH, but may also be used for a PUSCH. The network device may specify, by means of a signaling, a channel and/or a reference signal for which the uplink common beam is specifically used.

In the embodiment of the present disclosure, the one PUCCH resource may be multiplexed with a PUCCH resource used for an SR corresponding to a serving cell level-based BFR for the serving cell, or different from the PUCCH resource configured for the SR corresponding to the serving cell level-based BFR.

As another possible implementation, the network device may configure one PUCCH resource for each cell group of the UE, and configure two beam directions for the cell group. The two beam directions are associated with different TRPs respectively.

The network device may activate two beam directions by using a MAC CE signaling. The MAC signaling may include at least one of two beam IDs, a TRP ID corresponding to each beam ID, a CORESET pool index corresponding to each beam ID, a PUCCH resource ID, an indication field corresponding to each beam ID, and the like. The indication field corresponding to each beam ID is configured to indicate whether the respective beam ID presents in the MAC CE signaling.

The network device may also indicate, by means of a DCI signaling, the two beams corresponding to one PUCCH resource, and may use the DCI signaling for indicating a common beam (both for downlink and uplink) or an uplink common beam (only for uplink), to indicate the uplink common beams of two TRPs.

For example, multiple beams may be activated by the MAC CE signaling. All activated beams may correspond to one TRP, or correspond to two different TRPs.

A code point of the DCI signaling may correspond to one or more beam IDs. If one beam is indicated, the beam corresponds to one TRP. If two beams are indicated, each beam corresponds to one respective TRP. Which one or two beams corresponding to each code point of the DCI signaling is indicated by the MAC CE signaling, that is, the one or two beams corresponding to each code point of the DCI signaling is one or two beams in the multiple beams activated by the MAC CE signaling.

The one PUCCH resource may be multiplexed with a PUCCH resource configured for the SR corresponding to the serving cell level-based BFR for the serving cell, or different from the PUCCH resource configured for the SR corresponding to the serving cell level-based BFR.

As a further possible implementation, the network device may configure two PUCCH resources for each cell group of the UE, and the beam directions are associated with different TRPs respectively.

In the present disclosure, a respective beam direction is activated by a MAC CE signaling. The network device may indicate the beams corresponding to the two PUCCH resources by one MAC CE signaling, that is, the one MAC CE signaling may support to indicate the beams corresponding to the two PUCCH resources.

The MAC signaling may include at least one of two beam IDs, a TRP ID corresponding to each beam ID, a CORESET pool index corresponding to each beam ID, a PUCCH resource ID corresponding to each beam ID, an indication field corresponding to each beam ID, and the like.

Optionally, the beams corresponding to respective PUCCH resources may also be activated by two MAC CE signalings, that is, may be activated by two MAC CE signalings respectively. Each MAC CE signaling may include at least one of: a beam ID, a TRP ID (configured to indicate the TRP ID corresponding to each beam), a CORESET pool index (configured to indicate the CORESET pool index corresponding to each beam), and a PUCCH resource ID.

The network device may also indicate, by means of a DCI signaling, one beam corresponding to each PUCCH resource, and may respectively use the DCI signaling for indicating a common beam (both for downlink and uplink) or an uplink common beam (only for uplink), to indicate the uplink common beams of two TRPs. Each uplink common beam is configured for one corresponding PUCCH resource.

The network device also may activate one beam by each of the two MAC CE signalings. One DCI signaling is configured to indicate one beam corresponding to each PUCCH resource.

The network device also may activate the beam by one MAC CE signaling, and indicate the beam by one DCI signaling.

The network device may also indicate one beam for each of the two PUCCH resources by two MAC CE signalings and two DCI signalings. Each MAC CE signaling activates respective multiple beams. Each DCI signaling indicates one of the multiple beams activated by the respective MAC CE signaling.

One of the two PUCCH resources may be multiplexed with the PUCCH resource configured for the SR corresponding to the serving cell level-based BFR for the serving cell, or different from the PUCCH resource configured for the SR corresponding to the serving cell level-based BFR.

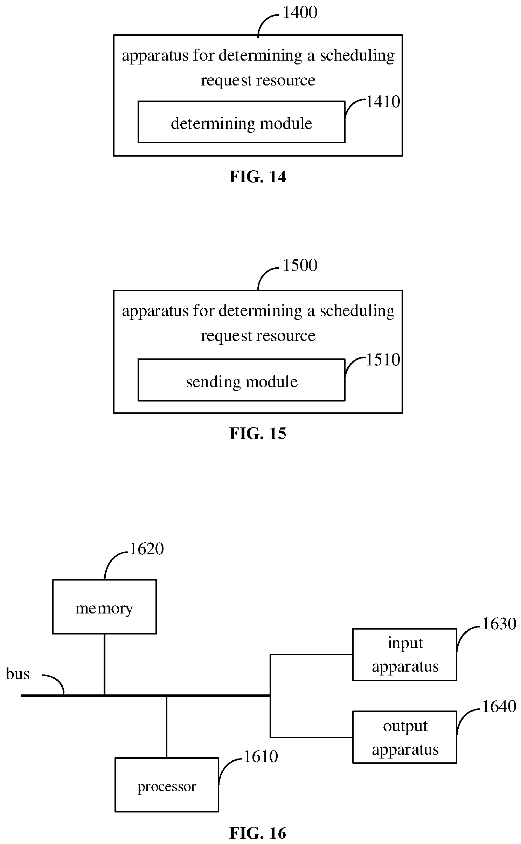

FIG. 14 is a block diagram of an apparatus for determining a scheduling request resource provided in an embodiment of the present disclosure. The apparatus may be applicable to a UE. As illustrated in FIG. 14, the apparatus 1400 for determining a scheduling request resource includes a determining module 1410.

The determining module 1410 is configured to determine a PUCCH resource. The PUCCH resource is configured to send an SR corresponding to a BFR of one or more TRPs.

Optionally, the determining module 1410 includes a receiving unit and a determining unit.

The receiving unit is configured to receive configuration information. The configuration information is configured to indicate a PUCCH resource corresponding to each cell group of the UE.

The determining unit is configured to determine a PUCCH resource corresponding to each TRP of the one or more TRPs based on the configuration information.

Optionally, the configuration information includes at least one of a cell group ID or at least one PUCCH resource ID corresponding to the cell group ID.

Optionally, the determining module 1410 is further configured to determine beam information corresponding to the at least one PUCCH resource.

Optionally, the determining module 1410 further configured to:
receive indication information, in which the indication information is configured to indicate one or more beam IDs of one or more beams corresponding to each PUCCH resource in the at least one PUCCH resource.

Optionally, the indication information may include at least one of at least one beam ID, a TRP ID corresponding to each beam ID, a CORESET pool index corresponding to each beam ID, a PUCCH resource ID, or an indication field corresponding to each beam ID. The indication field is configured to indicate whether the beam ID presents in the indication information.

Optionally, the indication information is at least one of a MAC CE or DCI.

Optionally, the configuration information is configured to indicate at least one of a first cell group ID or one PUCCH resource corresponding to the first cell group ID.

The indication information is configured to indicate one or more beam IDs corresponding to the one PUCCH resource. Each beam ID in the multiple beam IDs corresponds to a different TRP.

Optionally, the configuration information is configured to indicate at least one of a second cell group ID or multiple PUCCH resources corresponding to the second cell group ID.

The indication information is configured to indicate one beam ID for each PUCCH resource in the multiple PUCCH resources.

Optionally, the determining module 1410 is configured to determine a default beam as a beam corresponding to the PUCCH resource, in which the default beam is a beam corresponding to a CORESET.

Optionally, the default beam is a beam corresponding to a CORESET pool ID corresponding to the PUCCH or CORESETs with a same TRP ID.

Optionally, the determining unit is configured to determine the PUCCH resource corresponding to each TRP of the one or more TRPs based on a cell group where each TRP of the one or more TRPs is located and the PUCCH resource corresponding to each cell group in the configuration information.

Optionally, the PUCCH resource is the same as a second PUCCH resource of the UE;
or,
the PUCCH resource is different from a second PUCCH resource.

The second PUCCH resource is configured to send an SR corresponding to a BFR of a serving cell.

Optionally, the apparatus may further include a sending module.

The sending module is configured to send an SR for indicating a BFR based on a PUCCH resource and beam information corresponding to any TRP, in response to detecting that a beam failure occurs to the any TRP.

It needs to be noted that the above explanation of the embodiments of the method for determining a scheduling request resource provided in FIG. 1 to FIG. 8 also be applicable to the apparatus for determining a scheduling request resource in the embodiment, which will not be repeated here.

According to the apparatus for determining a scheduling request resource in the embodiment of the present disclosure, the PUCCH resource is determined, and the PUCCH resource is configured to send the SR corresponding to the BFR of the one or more TRPs, so that when the beam failure occurs to the TRP, the UE may send the SR for indicating the BFR in time, and the beam recovery can be performed as soon as possible, which improves timeliness and efficiency of the beam recovery, thereby improving throughput.

FIG. 15 is a block diagram of an apparatus for determining a scheduling request resource provided in another embodiment of the present disclosure. The apparatus may be applicable to a network device. As illustrated in FIG. 15, the apparatus 1500 for determining a scheduling request resource includes a sending module 1510.

The sending module 1510 is configured to send configuration information to a UE. The configuration information is configured to indicate a PUCCH resource of the UE. The PUCCH resource is configured for the UE to send an SR corresponding to a BFR of one or more TRPs.

Optionally, the configuration information includes at least one of a cell group ID or at least one PUCCH resource ID corresponding to the cell group ID.

Optionally, the sending module 1510 further configured to:
send indication information to the UE, in which the indication information is configured to indicate to the UE one or more beam IDs of one or more beams corresponding to each PUCCH resource in the at least one PUCCH resource.

Optionally, the indication information may include at least one of at least one beam ID, a TRP ID corresponding to each beam ID, a CORESET pool index corresponding to each beam ID, a PUCCH resource ID, or an indication field corresponding to each beam ID. The indication field corresponding to each beam ID is configured to indicate whether the beam ID presents in the indication information.

Optionally, the indication information is at least one of a MAC CE or DCI.

Optionally, the configuration information is configured to indicate at least one of a first cell group ID or one PUCCH resource corresponding to the first cell group ID.

The indication information is configured to indicate one or more beam IDs. Each beam ID in the multiple beam IDs corresponds to a different TRP.

Optionally, the configuration information is configured to indicate at least one of a second cell group ID or multiple PUCCH resources corresponding to the second cell group ID.

The indication information is configured to indicate one beam ID for each PUCCH resource in the multiple PUCCH resources.

Optionally, the PUCCH resource is the same as a second PUCCH resource of the UE;
or,
the PUCCH resource is different from a second PUCCH resource.

The second PUCCH resource is configured for the UE to send an SR corresponding to a BFR of a serving cell.

Optionally, the apparatus may further include a receiving module.

The receiving module is configured to receive an SR for indicating a BFR sent by the UE based on a PUCCH resource and beam information corresponding to the any TRP.

It needs to be noted that the above explanation of the embodiments of the method for determining a scheduling request resource provided in FIG. 9 to FIG. 13 also be applicable to the apparatus for determining a scheduling request resource in the embodiment, which will not be repeated here.

According to the apparatus for determining a scheduling request resource in the embodiment of the present disclosure, the configuration information is sent to the UE. The configuration information is configured to indicate the PUCCH resource of the UE. The PUCCH resource is configured for the UE to send the SR corresponding to the BFR of the one or more TRPs, so that when the beam failure occurs to the TRP, the UE may send the SR for indicating the BFR in time, and the beam recovery can be performed as soon as possible, which improves timeliness and efficiency of the beam recovery, thereby improving throughput.

In order to implement the above embodiments, the present disclosure further proposes a communication device.

The communication device provided in the embodiment of the present disclosure includes: a transceiver; a memory; and a processor, in which the processor respectively connects to the transceiver and the memory, and is configured to control the transceiver to send and receive wireless signals, and implement the method for determining a scheduling request resource applicable to the UE according to the above embodiments by executing computer executable instructions on the memory.

The communication device may be the aforementioned UE.

The processor may include various types of storage media, and the storage medium is a non-transitory computer storage medium. The processor may be connected to the memory via a bus or the like, and is configured to read the executable program stored on the memory, for example, as shown in at least one of FIG. 1 to FIG. 8.

In order to implement the above embodiments, the present disclosure further proposes a communication device.

The communication device provided in the embodiment of the present disclosure includes: a transceiver; a memory; and a processor, in which the processor respectively connects to the transceiver and the memory, and is configured to control the transceiver to send and receive wireless signals, and implement the method for determining a scheduling request resource applicable to the network device according to the above embodiments by executing computer executable instructions on the memory.

The communication device may be the aforementioned network device.

The processor may include various types of storage media, and the storage medium is a non-transitory computer storage medium. The processor may be connected to the memory via a bus or the like, and is configured to read the executable program stored on the memory, for example, as shown in at least one of FIG. 9 to FIG. 13.

In order to implement the above embodiments, the present disclosure further proposes a computer storage medium.

The computer storage medium provided in the embodiment of the present disclosure stores an executable program. After the executable program is executed by a processor, the above method can be implemented, for example, as shown in at least one of FIG. 1 to FIG. 8.

In order to implement the above embodiments, the present disclosure further proposes a computer storage medium.

The computer storage medium provided in the embodiments of the present disclosure stores an executable program. After the executable program is executed by a processor, the above method can be implemented, for example, as shown in at least one of FIG. 9 to FIG. 13.

In the present disclosure, a communication device and a readable storage medium are further provided according to the embodiments of the present disclosure.

As shown in FIG. 16, FIG. 16 illustrates a block diagram of a device for determining a scheduling request resource according to the embodiments of the present disclosure. A communication device is intended to represent various types of digital computers, such as laptop computers, desktop computers, workstations, personal digital assistants, servers, blade servers, mainframe computers, and other suitable computers. A communication device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 16, the communication device includes: one or more processors 1610, a memory 1620, and an interface configured to connect various components, including a high-speed interface and a low-speed interface. The various components are connected to each other with different buses, and may be installed on a public main board or installed in other ways as needed. The processor may process instructions executed in the communication device, including instructions stored in or on the memory to display graphical information of the GUI on an external input/output device (such as a display device coupled to an interface). In other implementations, more than one processor and/or more than one bus may be configured with more than one memory if necessary. Similarly, the processor may connect a plurality of communication devices, and each device provides a part of necessary operations (for example, as a server array, a group of blade servers, or a multi-processor system). FIG. 16 takes one processor 1610 as an example.

The memory 1620 is a non-transitory computer-readable storage medium provided in the present disclosure. The memory stores instructions executable by at least one processor, so that the at least one processor executes the method for determining a scheduling request resource provided in the present disclosure. The non-transitory computer-readable storage medium of the present disclosure stores computer instructions, in which the computer instructions are configured so that a computer executes the method for determining a scheduling request resource provided in the present disclosure.

As a non-transitory computer-readable storage medium, the memory 1620 may be configured to store non-transitory software programs, non-transitory computer-executable programs and modules, such as program instructions/modules corresponding to the method for determining a scheduling request resource in the embodiment of the present disclosure (for example, a determining module 1410 as shown in FIG. 14 or a sending module 1510 as shown in FIG. 15). The processor 1610 executes various functional applications and data processing of the server by running a non-transitory software program, an instruction, and a module stored in the memory 1620, that is, the method for determining a scheduling request resource in any of the above method embodiments is implemented.

The memory 1620 may include a program storage area and a data storage area; the program storage area may store an operating system and application programs required by at least one function; the data storage area may store data created based on the use of a positioning communication device, etc. In addition, the memory 1620 may include a high-speed random-access memory, and may also include a non-transitory memory, such as at least one magnetic disk storage device, a flash memory device, or other non-transitory solid-state storage devices. Optionally, the memory 1620 may include a memory set remotely relative to the processor 1610 that may be connected to a positioning communication device via a network. The example of the above network includes but is not limited to an Internet, an enterprise intranet, a local area network, a mobile communication network and their combination.

A communication device for determining a scheduling request resource may further include: an input apparatus 1630 and an output apparatus 1640. The processor 1610, the memory 1620, the input apparatus 1630, and the output apparatus 1640 may be connected through a bus or in other ways. In FIG. 16, a connection via a bus is taken as an example.

The input apparatus 1630 may receive input digital or character information, and generate key signal input related to user setting and function control of a positioning communication device, such as a touch screen, a keypad, a mouse, a track pad, a touch pad, an indicating rod, one or more mouse buttons, a trackball, a joystick and other input apparatuses. The output apparatus 1640 may include a display device, an auxiliary lighting apparatus (for example, a LED) and a tactile feedback apparatus (for example, a vibration motor), etc. The display device may include but not limited to a liquid crystal display (LCD), a light emitting diode (LED) display and a plasma display. In some implementations, the display device may be a touch screen.

Various implementation modes of the systems and technologies described herein may be implemented in a digital electronic circuit system, an integrated circuit system, a dedicated ASIC (application specific integrated circuit), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

The computer programs (also called as programs, softwares, software applications, or codes) include machine instructions of a programmable processor, and may be implemented with high-level procedure and/or object-oriented programming languages, and/or assembly/machine languages. As used herein, the terms "a machine-readable medium" and "a computer-readable medium" refer to any computer program product, device, and/or apparatus configured to provide machine instructions and/or data for a programmable processor (for example, a magnetic disk, an optical disk, a memory, a programmable logic device (PLD)), including a machine-readable medium that receive machine instructions as machine-readable signals. The term "a machine-readable signal" refers to any signal configured to provide machine instructions and/or data for a programmable processor.

In order to provide interaction with the user, the systems and technologies described here may be implemented on a computer, and the computer has: a display apparatus for displaying information to the user (for example, a CRT (cathode ray tube) or an LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), a blockchain network, and an internet.

The computer system may include a client and a server. The client and server are generally far away from each other and generally interact with each other through a communication network. The relation between the client and the server is generated by computer programs that run on the corresponding computer and have a client-server relationship with each other.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

The above specific implementations do not constitute a limitation on the protection scope of the present disclosure. Those skilled in the art should understand that various modifications, combinations, sub-combinations and substitutions may be made to the methods, apparatuses, and method blocks, apparatuses, and device units in apparatus embodiments according to design requirements and other factors. Any modification, equivalent replacement, improvement, etc., made within the spirit and principle of embodiments of the present disclosure shall be included within the protection scope of embodiments of the present disclosure.

## Claims

1. A method for determining a scheduling request resource, applicable to a user equipment (UE), comprising:
determining a physical uplink control channel (PUCCH) resource, wherein the PUCCH resource is configured to send a scheduling request (SR) corresponding to a beam failure recovery (BFR) of one or more transmission and reception points (TRPs).

2. The method of claim 1, wherein determining the PUCCH resource comprises:
receiving configuration information, wherein the configuration information is configured to indicate a PUCCH resource corresponding to each cell group of the UE; and
determining a PUCCH resource corresponding to each TRP of the one or more TRPs based on the configuration information.

3. The method of claim 2, wherein the configuration information comprises at least one of:
a cell group identification (ID); or
at least one PUCCH resource ID corresponding to the cell group ID.

4. The method of claim 3, further comprising:
determining beam information corresponding to the at least one PUCCH resource.

5. The method of claim 4, wherein determining the beam information corresponding to the at least one PUCCH resource comprises:
receiving indication information, wherein the indication information is configured to indicate one or more beam IDs of one or more beams corresponding to each PUCCH resource in the at least one PUCCH resource.

6. The method of claim 5, wherein the indication information comprises at least one of:
at least one beam ID;
a TRP ID corresponding to each beam ID;
a control resource set (CORESET) pool index corresponding to each beam ID;
a PUCCH resource ID; or
an indication field corresponding to each beam ID, wherein the indication field is configured to indicate whether the beam ID presents in the indication information.

7. The method of claim 5 or 6, wherein the indication information comprises at least one of:
a medium access control control element (MAC CE); or
downlink control information (DCI).

8. The method of claim 7, wherein,
the configuration information is configured to indicate at least one of a first cell group ID or one PUCCH resource corresponding to the first cell group ID; and
the indication information is configured to indicate one or more beam IDs corresponding to the one PUCCH resource, and each beam ID in the beam IDs corresponds to a different TRP.

9. The method of claim 7, wherein,
the configuration information is configured to indicate at least one of a second cell group ID or more than one PUCCH resource corresponding to the second cell group ID; and
the indication information is configured to indicate one beam ID for each of the more than one PUCCH resource.

10. The method of claim 4, wherein determining the beam information corresponding to the at least one PUCCH resource comprises:
determining a default beam as a beam corresponding to the PUCCH resource, wherein the default beam is a beam corresponding to a CORESET.

11. The method of claim 10, wherein the default beam is a beam corresponding to a CORESET pool ID corresponding to the PUCCH or CORESETs with a same TRP ID.

12. The method of claim 2, wherein determining the PUCCH resource corresponding to each TRP of the one or more TRPs based on the configuration information comprises:
determining the PUCCH resource corresponding to each TRP of the one or more TRPs based on a cell group where each TRP of the one or more TRPs is located and the PUCCH resource corresponding to each cell group in the configuration information.

13. The method of any of claims 1 to 12, wherein,
the PUCCH resource is the same as a second PUCCH resource of the UE;
or,
the PUCCH resource is different from a second PUCCH resource;
wherein the second PUCCH resource is configured to send an SR corresponding to a BFR of a serving cell.

14. The method of any of claims 1 to 12, further comprising:
in response to detecting that a beam failure occurs to any TRP, sending an SR for indicating a BFR based on a PUCCH resource and beam information corresponding to the any TRP.

15. A method for determining a scheduling request resource, applicable to a network device, comprising:
sending configuration information to a user equipment (UE), wherein the configuration information is configured to indicate a physical uplink control channel (PUCCH) resource of the UE, the PUCCH resource is configured for the UE to send a scheduling request (SR) corresponding to a beam failure recovery (BFR) of one or more transmission and reception points (TRPs).

16. The method of claim 15, wherein the configuration information comprises at least one of:
a cell group identification (ID); or
at least one PUCCH resource ID corresponding to the cell group ID.

17. The method of claim 16, further comprising:
sending indication information to the UE, wherein the indication information is configured to indicate, to the UE, one or more beam IDs of one or more beams corresponding to each PUCCH resource in the at least one PUCCH resource.

18. The method of claim 17, wherein the indication information comprises at least one of:
at least one beam ID;
a TRP ID corresponding to each beam ID;
a control resource set (CORESET) pool index corresponding to each beam ID;
a PUCCH resource ID; or
an indication field corresponding to each beam ID, wherein the indication field is configured to indicate whether the beam ID presents in the indication information.

19. The method of claim 17 or 18, wherein the indication information comprises at least one of:
a medium access control control element (MAC CE); or
downlink control information (DCI).

20. The method of claim 19, wherein,
the configuration information is configured to indicate at least one of a first cell group ID or one PUCCH resource corresponding to the first cell group ID; and
the indication information is configured to indicate one or more beam IDs, and each beam ID in the beam IDs corresponds to a different TRP.

21. The method of claim 19, wherein,
the configuration information is configured to indicate at least one of a second cell group ID or more than one PUCCH resource corresponding to the second cell group ID; and
the indication information is configured to indicate one beam ID for each of the more than one PUCCH resource.

22. The method of any of claims 15 to 21, wherein,
the PUCCH resource is the same as a second PUCCH resource of the UE;
or,
the PUCCH resource is different from a second PUCCH resource;
wherein the second PUCCH resource is configured for the UE to send an SR corresponding to a BFR of a serving cell.

23. The method of any of claims 15 to 21, further comprising:
receiving an SR for indicating a BFR from the UE based on a PUCCH resource and beam information corresponding to any TRP.

24. An apparatus for determining a scheduling request resource, applicable to a user equipment (UE), comprising:
a determining module, configured to determine a physical uplink control channel (PUCCH) resource; wherein the PUCCH resource is configured to send a scheduling request (SR) corresponding to a beam failure recovery (BFR) of one or more transmission and reception points (TRPs).

25. An apparatus for determining a scheduling request resource, applicable to a network device, comprising:
a sending module, configured to send configuration information to a user equipment (UE), wherein the configuration information is configured to indicate a physical uplink control channel (PUCCH) resource of the UE, the PUCCH resource is configured for the UE to send a scheduling request (SR) corresponding to a beam failure recovery (BFR) of one or more transmission and reception points (TRPs).

26. A communication device, comprising:
a processor,
a transceiver,
a memory, and
a computer program stored on the memory, wherein the processor executes the computer program to implement the method for determining a scheduling request resource according to any one of claims 1 to 14.

27. A communication device, comprising:
a processor,
a transceiver,
a memory, and
a computer program stored on the memory, wherein the processor executes the computer program to implement the method for determining a scheduling request resource according to any one of claims 15 to 23.

28. A computer storage medium, wherein the computer storage medium stores an executable program; after the executable program is executed by a processor, the method for determining a scheduling request resource according to any one of claims 1 to 14 is implemented.

29. A computer storage medium, wherein the computer storage medium stores an executable program; after the executable program is executed by a processor, the method for determining a scheduling request resource according to any one of claims 15 to 23 is implemented.
